# EUROPÄISCHE PATENTSCHRIFT

(11) **EP 1 506 380 B1**
(45) Veröffentlichungstag und Bekanntmachung des Hinweises auf die Patenterteilung: **02.08.2006**
(21) Anmeldenummer: 03727379.4
(22) Anmeldetag: 26.04.2003
(51) Int. Cl.: G01G 3/147, G01G 23/37, G01G 19/414

(54) **KRAFTMESSSYSTEM MIT MEHREREN KRAFTMESSZELLEN UND MIT EINER SCHALTUNG ZUR ERRECHNUNG EINES GESAMTSIGNALS**
FORCE-MEASURING SYSTEM COMPRISING SEVERAL FORCE-MEASURING CELLS AND A CIRCUIT CALCULATING A TOTAL SIGNAL
SYSTEME DYNAMOMETRIQUE COMPRENANT PLUSIEURS CELLULES DYNAMOMETRIQUES ET UN CIRCUIT DESTINE A CALCULER UN SIGNAL GLOBAL

(30) Priorität: 15.05.2002 DE 10221628
(43) Veröffentlichungstag der Anmeldung: 16.02.2005
(73) Patentinhaber: SARTORIUS AG, 37075 Göttingen (DE)
(72) Erfinder: LAUKE, Jürgen, 37124 Rosdorf (DE); OLDENDORF, Christian, 33077 Göttingen (DE); SCHINK, Thomas, 37077 Göttingen (DE)
(86) Internationale Anmeldenummer: PCT/EP2003/004385
(87) Internationale Veröffentlichungsnummer: WO 2003/098169

(56) Entgegenhaltungen:
- EP-A- 0 319 176
- EP-A- 0 319 202
- DE-A- 4 417 228
- US-A1- 2001 010 424
- US-A1- 2001 054 516

## Beschreibung

Die Erfindung bezieht sich auf ein Kraftmesssystem mit mindestens zwei Kraftmesszellen, die Teilkräfte der zu messenden Kraft erfassen und in ein digitales Ausgangssignal umwandeln, und mit einer elektronischen Schaltung, die aus den Ausgangssignalen der einzelnen Kraftmesszellen ein von der Größe der zu messenden Kraft abhängiges Gesamtsignal errechnet und dieses an eine nachfolgende Elektronikeinheit zur Weiterverarbeitung oder zur Datenausgabe weitergibt.

Aus der EP 319 202 B1 sowie aus der EP 319 176 A2 ist eine Waage mit einer Vielzahl von Kraftmesszellen bekannt, bei der die elektronische Schaltung, die das Gesamtsignal errechnet und an die nachfolgende Elektronikeinheit weitergibt, in einer sogenannten "junction box" untergebracht ist. Die einzelnen Kraftmesszellen sind dabei sternförmig mit der junction box verbunden und das Gesamtsignal als Ausgangssignal der junction box wird über eine getrennte Verbindungsleitung der nachfolgenden Elektronikeinheit zugeführt.

Die Benutzung einer gesonderten junction box verursacht jedoch einen zusätzlichen Hardware-Aufwand.

Weiter besteht die Möglichkeit, die Schaltung, die das Gesamtsignal errechnet und an die nachfolgende Elektronikeinheit weitergibt, in die nachfolgende Elektronikeinheit zu integrieren. Dies führt jedoch dazu, dass in der nachfolgenden Elektronikeinheit Programmteile und/oder Schaltungsteile vorhanden sind, die für die Berechnung des Gesamtsignals benötigt werden. Dadurch ist keine klare Trennung der Funktionsbereiche "Ermittlung des Messergebnisses der Kraft" einerseits und "kundenspezifische Weiterverarbeitung dieses Messergebnisses" andererseits gegeben. Diese Trennung ist beispielsweise für die Prüfbarkeit der einzelnen Schritte wichtig oder bei Fragen der Eichfähigkeit des Messergebnisses oder bei umfangreichen, für verschiedene Kunden verschiedene Weiterverarbeitungsalgorithmen.

Aufgabe der Erfindung ist es daher, ein Kraftmesssystem der eingangs genannten Art so weiterzubilden, dass bei minimalem Aufwand eine klare Trennung zwischen der Ermittlung des Messergebnisses und der nachfolgenden Weiterverarbeitung dieses Messergebnisses erzielt wird.

Erfindungsgemäß wird dies dadurch erreicht, dass die elektronische Schaltung, die das Gesamtsignal errechnet und an die nachfolgende Elektronikeinheit weitergibt, in mindestens einer Kraftmesszelle integriert ist.

Durch diese Integration fällt die gesonderte junction box ganz weg. Da in den einzelnen Kraftmesszellen sowieso ein Mikroprozessor vorhanden ist, der die Analog/Digital-Wandlung, die Temperaturkompensation, etc. durchführt, muss das Programm dieses Mikroprozessors nur um das Programm zur Bildung des Gesamtsignals erweitert werden. Dies erfordert manchmal einen Mikroprozessor mit größerem Speicher, häufig reicht der vorhandene Speicherplatz jedoch für die zusätzlichen Programmteile, sodass durch die Integration der zusätzlichen Funktion keine Mehrkosten bei der Hardware anfallen. Besonders in diesem Fall ist es vorteilhaft, die elektronische Schaltung, die das Gesamtsignal errechnet und an die nachfolgende Elektronikeinheit weitergibt, in jede Kraftmesszelle zu integrieren. Man erhält dadurch Gleichteile und muss bei der Konzeption, der Montage und auch beim eventuelle Austausch im Fehlerfall keine verschiedenen Kraftmesszellenarten unterscheiden.

Weitere vorteilhafte Ausgestaltungen ergeben sich aus den abhängigen Ansprüchen 3 - 11. Besonders ist dabei darauf hinzuweisen, dass gemäß Anspruch 9 mit einem Kraftmesssystem mit mindestens drei Kraftmesszellen, auf denen sich eine gemeinsame Wägeplattform abstützt, selbstverständlich auch eine Waage aufgebaut werden kann.

Die Erfindung wird im Folgenden anhand der schematischen Figuren beschrieben. Dabei zeigt:
Figur 1 eine erste Ausgestaltung des Kraftmesssystems,
Figur 2 eine zweite Ausgestaltung des Kraftmesssystems,
Figur 3 eine dritte Ausgestaltung des Kraftmesssystems
Figur 4 eine vierte Ausgestaltung des Kraftmesssystems
Figur 5 eine fünfte Ausgestaltung des Kraftmesssystems
Figur 6 ein Kraftmesssystem in Form einer Waage und
Figur 7 ein Kraftmesssystem in einem Kraftfahrzeugsitz.

In allen Ausgestaltungen ist das Kraftmesssystem mit drei Kraftmesszellen gezeichnet. Kraftmesssysteme mit zwei Kraftmesszellen oder mit vier oder mehr Kraftmesszellen sind in entsprechender Weise aufgebaut.

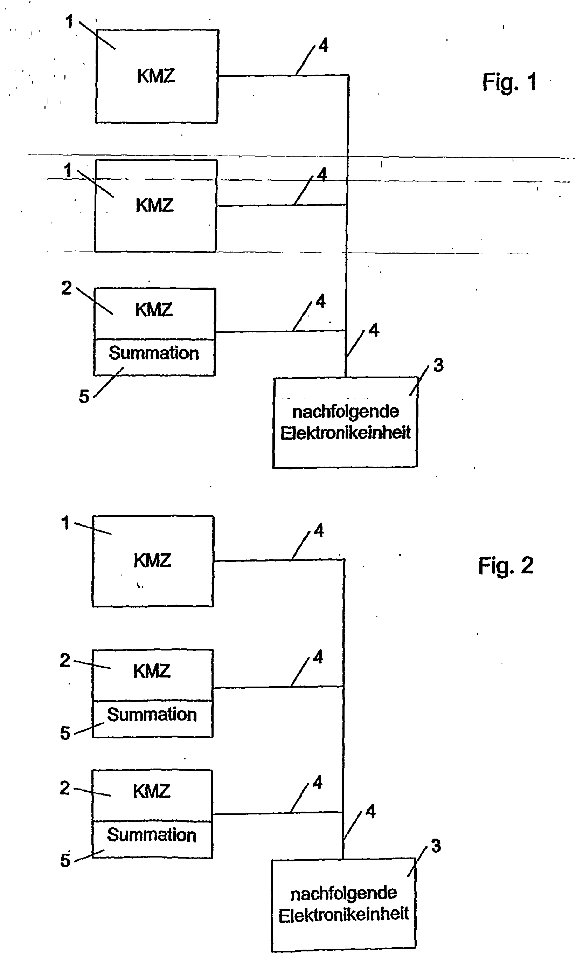

Das Kraftmesssystem in Figur 1 besteht aus zwei normalen digitalen Kraftmesszellen 1 und einer Kraftmesszelle 2, in die die elektronische Schaltung 5, die das Gesamtsignal errechnet und an die nachfolgende Elektronikeinheit 3 weitergibt, integriert ist. Die drei Kraftmesszellen sind mechanisch in bekannter Weise so in das Kraftmesssystem eingebaut, dass jede Kraftmesszelle eine Teilkraft der zu messenden Kraft erfasst und die zu messende Gesamtkraft im allgemeinen gleich der Summe der drei Teilkräfte ist. Bei einer Waage z. B. stützt sich die Wägeplattform auf den drei Kraftmesszellen ab und die Verteilung der Teilkräfte auf die drei Kraftmesszellen richtet sich nach der Lage des Wägegutes auf der Plattform; die Summe der drei Teilkräfte ist jedoch immer gleich dem Gesamtgewicht des Wägegutes. Die drei Kraftmesszellen sind über ein Bussystem 4 untereinander verbunden. An dieses Bussystem 4 ist auch die nachfolgende Elektronikeinheit 3 angeschlossen. Die beiden Kraftmesszellen 1 geben ihr digitales Ausgangssignal auf das Bussystem 4. Von dort wird es von der elektronischen Schaltung 5 in der Kraftmesszelle 2 aufgenommen und zusammen mit dem Signal der Kraftmesszelle 2 zu dem Gesamtsignal zusammengefasst. Dieses Gesamtsignal gibt die elektronische Schaltung 5 ebenfalls auf das Bussystem 4 und leitet es so zur nachfolgenden Elektronikeinheit 3 weiter. Die elektronische Schaltung 5 nimmt also bezüglich der Kommunikation der drei Kraftmesszellen untereinander die Funktion eines Masters wahr und fragt die drei Einzelwerte ab und verarbeitet sie zum Gesamtsignal. Bezüglich der Kommunikation mit der nachfolgenden Elektronilceinheit 3 ist die elektronische Schaltung 5 jedoch ein Slave, der sein Gesamtsignal auf Anforderung der nachfolgenden Elektronikeinheit 3 an diese weitergibt. Die drei Kraftmesszellen sind also zusammen mit der in die Kraftmesszelle 2 integrierten Schaltung 5 autark und können zusammen das von der Größe der zu messenden Kraft abhängige Gesamtsignal ermitteln und an die nachfolgende Elektronikeinheit 3 ausgeben. Die nachfolgende Elektronikeinheit 3 muss dann nur noch - je nach Anwendungsfäll - die Datenausgabe/Datenanzeige oder die kundenspezifische Weiterverarbeitung übernehmen.

Bei der Entwicklung und Erprobung des Kraftmesssystems ist dadurch eine klare Trennung der Zuständigkeiten gegeben: Der Messsystemhersteller ist für die Kraftmesszellen 1 und 2 sowie für die elektronische Schaltung 5 und die interne Kommunikation zwischen den Kraftmesszellen zuständig und gibt das fertige Gesamtsignal als Größe für die zu messende Kraft an die nachfolgende Elektronikeinheit 3 weiter, die dann ganz in die Zuständigkeit des Anwenders fällt.

Die in der Figur gestrichelt eingezeichnete Trennung zwischen der eigentlichen Kraftmesszelle 2 und der elektronischen Schaltung 5 ist selbstverständlich nur eine zeichnerische Darstellung der verschiedenen Funktionen. Im allgemeinen wird ein und derselbe Mikroprozessor beide Funktionen wahrnehmen: Sowohl die für die eigentliche Kraftmesszelle notwendigen Funktionen, wie z. B. die Steuerung der Analog/Digital-Wandlung, die Temperaturkompensation, die Skalierung etc., als auch die Rechen- und Steuerfunktionen der elektronischen Schaltung 5, die das Gesamtsignal errechnet und an die nachfolgende Elektronikeinheit 3 weitergibt. In vielen Fällen wird der sowieso in der Kraftmesszelle vorhandenen Mikroprozessor so leistungsfähig sein, dass er ohne Hardware-Erweiterung diese Zusatzaufgaben mit übernehmen kann; die Kraftmesszellen 1 und 2 unterscheiden sich in diesem Fall hardwaremäßig nicht, in den Kraftmesszellen 2 ist nur ein umfangreicheres Programm gespeichert. Es kann aber auch sein, dass der Mikroprozessor in der Kraftmesszelle 2 eine Nummer größer sein muss oder einen größeren Speicherbereich enthält oder durch einen zusätzlichen Speicherbaustein erweitert ist.

Eine zweite Ausgestaltung des Kraftmesssystems ist in Figur 2 gezeigt. Gleiche Teile wie in der ersten Ausgestaltung gemäß Figur 1 sind mit den gleichen Bezugszahlen bezeichnet und werden nicht noch mal erläutert - dasselbe gilt auch für die folgenden Figuren. In Figur 2 gibt es zwei Kraftmesszellen 2, die die elektronische Schaltung 5 enthalten und nur eine Kraftmesszelle ohne die elektronische Schaltung 5. Diese Ausgestaltung hat den Vorteil, dass das Gesamtsignal von zwei verschiedenen elektronischen Schaltungen 5 errechnet werden kann. Bei zeitlich veränderlichen Kräften ist dabei durch bekannte Synchronisationsmechanismen dafür zu sorgen, dass die beiden elektronischen Schaltungen 5 zur Berechnung zeitidentisch erfasste Eingangsdaten verwenden. Die beiden Ergebnisse können dann miteinander verglichen werden und bei Nichtübereinstimmung erfolgt eine Fehlermeldung. Dieser Vergleich und die evtl. Generierung einer Fehlermeldung erfolgt ebenfalls innerhalb der elektronischen Schaltung 5. Durch diese doppelte Berechnung kann eine Funktionsfehlererkennbarkeit gewährleistet werden, wie sie z. T. für die Eichfähigkeit des Gesamtsignales gefordert wird.

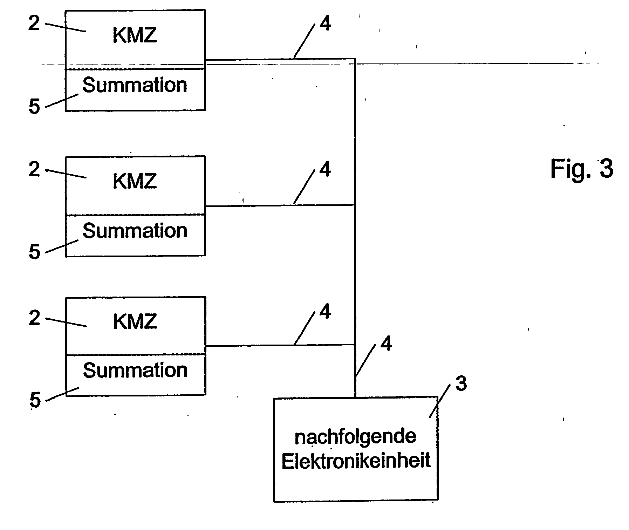

Eine dritte Ausgestaltung des Kraftmesssystems ist in Figur 3 gezeigt. In dieser Ausgestaltung sind drei Schaltungen 5, die das Gesamtsignal errechnen und an die nachfolgende Elektronikeinheit 3 weitergeben, vorhanden. Dies ist einmal unter dem Gesichtspunkt der Benutzung von Gleichteilen vorteilhaft, da nur noch eine Sorte von Kraftmesszellen benötigt wird. Mit drei elektronischen Schaltungen 5 ist aber auch eine verbesserte Funktionsfehlererkennbarkeit möglich: Die drei berechneten Gesamtsignale können miteinander verglichen werden und bei Übereinstimmung wird das Ergebnis normal ausgegeben. Stimmen noch zwei Gesamtsignale überein und das dritte Gesamtsignal weicht ab, so kann das mehrheitliche Gesamtsignal ausgegeben werden und gleichzeitig ein Signal ausgegeben werden, dass eine Wartung/Reparatur erforderlich ist. Und nur wenn alle drei Gesamtsignale verschieden sind, muss eine Fehlermeldung ohne Ergebnisausgabe erfolgen.

Die Ausgestaltung gemäß Figur 3 ist aber auch unter dem alleinigen Gesichtspunkt der Gleichteile vorteilhaft, besonders wenn die Kraftmesszellen 1 und 2 hardwaremäßig sowieso identisch sind. Durch geeignete Mittel, wie z. B. Steckerkodierung, Auswahlschalter oder Parametrierung im Festwertspeicher, ist dann eine elektronische Schaltung 5 auszuwählen, die aktiv ist, während die beiden anderen elektronischen Schaltungen 5 inaktiv bleiben und höchsten dann aktiviert werden, falls die erste elektronische Schaltung 5 ausfällt.

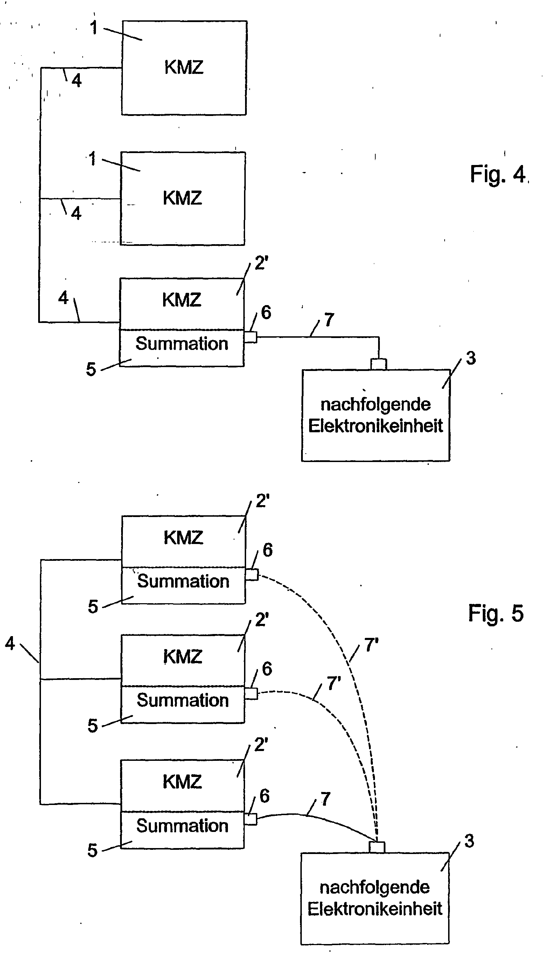

In Figur 4 ist eine vierte Ausgestaltung des Kraftmesssystems gezeigt. In dieser Ausgestaltung ist die nachfolgende Elektronikeinheit 3 nicht an das Bussystem 4 angeschlossen, sondern über einen besonderen Stecker 6, der sich an der Kraftmesszelle 2', die die elektronische Schaltung 5 enthält, befindet. Dadurch dient das Bussystem 4 nur der internen Kommunikation der Kraftmesszellen 1 und 2' und ist hardwaremäßig-getrennt von der Verbindung 7 zur nachfolgenden Elektronikeinheit 3.

Die in Figur 5 dargestellte fünfte Ausgestaltung des Kraftmesssystems ähnelt der Ausgestaltung gemäß Figur 4, sie beinhaltet nur drei gleiche Kraftmesszellen 2', die alle die Schaltung 5 und den Stecker 6 enthalten. Die nachfolgende Elektronikeinheit 3 kann dann an eine beliebige Kraftmesszelle angeschlossen werden. - Dies ist in Figur 5 durch die Verbindung 7 und die gestrichelt gezeichneten weiteren Verbindungen 7' angedeutet. Die elektronische Schaltung 5, die in der Kraftmesszelle 2' vorhanden ist, an der die nachfolgende Elektronikeinheit 3 angeschlossen wird, wird dann automatisch aktiv, während die anderen beiden Schaltungen 5 inaktiv verbleiben. Bei der Montage des Kraftmesssystems kann dann die geometrisch am günstigsten liegende Kraftmesszelle 2' benutzt werden. Bei einer Wartung kann außerdem die nachfolgende Elektronikeinheit 3 nacheinander an alle drei Kraftmesszellen angeschlossen werden und so die einwandfreie Funktion der elektronischen Schaltung 5 überprüft werden. - Soll diese Funktionsprüfung jedoch dauernd erfolgen, so ist selbstverständlich die Ausgestaltung gemäß Figur 3 günstiger.

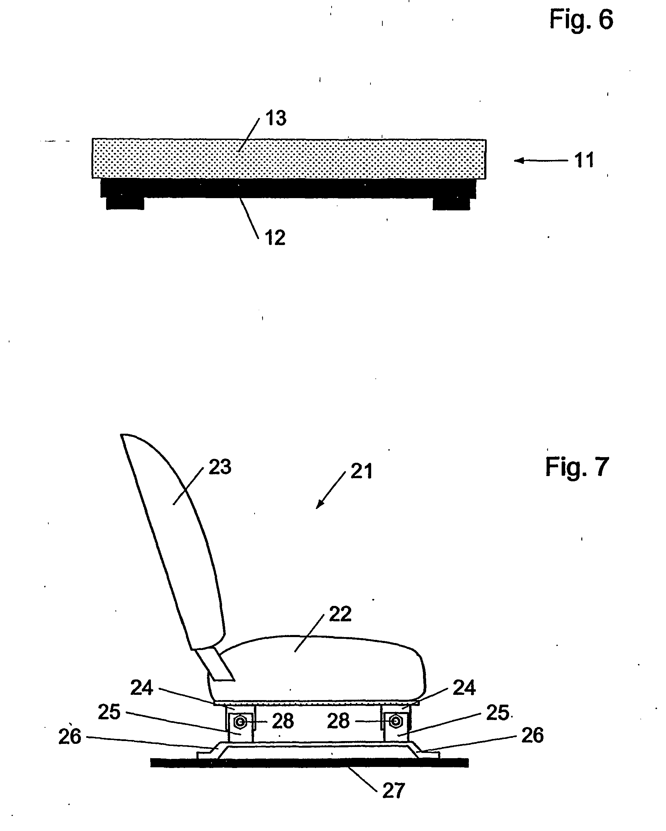

In Figur 6 ist eine Waage 11 gezeigt, die ein Kraftmesssystem mit vier Kraftmesszellen enthält. Die Waage besteht aus einem Unterbau 12, der im Inneren vier Kraftmesszellen enthält, die gemeinsam die Wägeplattform 13 stützen. Waagen dieser Art sind allgemein bekannt, sodass sie hier in ihrem mechanischem Aufbau nicht näher erläutert werden müssen. Die einzelnen Kraftmesszellen, ihre gegenseitige Verbindung und die Elektronik ist dabei gemäß einer der Figuren 1- 5 aufgebaut.

In Figur 7 ist als zweites Anwendungsbeispiel ein Sitz 21 gezeigt, wie er beispielsweise in Kraftfahrzeugen eingebaut wird. Der Sitz 21 besteht aus einer Sitzfläche 22 und einer Rückenlehne 23. Unterhalb der Sitzfläche 22 sind vier vertikale Laschen 24 angebracht, von denen in der Seitenansicht in Figur 7 zwei erkennbar sind. Den Laschen 24 gegenüber befinden sich Laschen 25, die an einem Gestell 26 am Fahrzeugboden 27 befestigt sind. Zwischen den gestellfesten Laschen 25 und den mit der Sitzfläche verbindenen Laschen 24 befinden sich insgesamt vier Kraftmesszellen, von denen in Figur 7 die Befestigungsbolzen 28 von zweien erkennbar sind. Die vier Kraftmesszellen liefern dann ein Gesamtsignal, das dem Gewicht des Sitzes und der darauf sitzenden Person entspricht. Die Verbindung der vier Kraftmesszellen erfolgt dabei entsprechend einer der Figuren 1 - 5. Da das Gewicht des Sitzes allein bekannt ist, kann aus dem Gesamtgewicht das Gewicht der Person auf dem Sitz hergeleitet werden. Dieser Wert kann z. B. zur Steuerung der verschiedenen Stufen der Auslösung eines Airbags genutzt werden: Bei einer schweren Person wird im Falle eines Crashs der Airbag voll ausgelöst; bei einer leichten Person bzw. bei einem Kind wird der Airbag nur z. T. bzw. vermindert ausgelöst oder ganz abgeschaltet.

Wird bei dem Kraftmesssystem für einen Sitz gemäß Figur 7 nicht nur das Summensignal der vier Kraftmesszellen gebildet, sondern auch das Verhältnis der Einzelsignale der einzelnen Kraftmesszellen im Verhältnis zum Gesamt/Summensignal, so kann daraus in bekannter Weise die Lage des Schwerpunktes der Person auf dem Sitz hergeleitet werden. Dieses Schwerpunktsignal kann dann bei Kraftfahrzeugen mit mehreren Airbags dazu herangezogen werden, die Stärke der Auslösung der einzelnen Airbags zu steuern oder z. B. bei Erkennung einer stark vorgebeugten Sitzposition die Auslösung des Frontairbags zu verhindern.

In gleicher Weise kann auch bei der Waage gemäß Figur 6 aus den Einzelsignalen der einzelnen Kraftmesszellen die Lage des Schwerpunktes des Wägegutes hergeleitet werden, sodass die Waage 11 nicht nur zur Gewichtsbestimmung, sondern auch zur Schwerpunktsbestimmung benutzt werden kann.

Für besondere Anwendungsfälle ist es selbstverständlich auch möglich, dass die nachfolgende Elektronikeinheit 3 auf die Ausgangssignale der einzelnen Kraftmesszellen zurückgreift. Dies bereitet besonders in den Ausgestaltungen 1 bis 3 kein Problem, da die gesamte Kommunikation über das gemeinsame Bussystem 4 erfolgt.

## Patentansprüche

1. Kraftmesssystem mit mindestens zwei Kraftmesszellen, die Teilkräfte der zu messenden Kraft erfassen und in eine digitales Ausgangssignal umwandeln, und mit einer elektronischen Schaltung, die aus den Ausgangssignalen der einzelnen Kraftmesszellen ein von der Größe der zu messenden Kraft abhängiges Gesamtsignal errechnet und dieses an eine nachfolgende Elektronikeinheit zur Weiterverarbeitung oder zur Datenausgabe weitergibt, **dadurch gekennzeichnet, dass** die elektronische Schaltung (5), die das Gesamtsignal errechnet und an die nachfolgende Elektronikeinheit (3) weitergibt, in mindestens einer Kraftmesszelle (2, 2') integriert ist.

2. Kraftmesssystem nach Anspruch 1, **dadurch gekennzeichnet, dass** die elektronische Schaltung (5), die das Gesamtsignal errechnet und an die nachfolgende Elektronikeinheit (3) weitergibt, in jeder Kraftmesszelle (2, 2') integriert ist.

3. Kraftmesssystem nach Anspruch 1, **dadurch gekennzeichnet, dass** die einzelnen Kraftmesszellen (1, 2) über ein Bussystem (4) miteinander verbunden sind.

4. Kraftmesssystem nach Anspruch 3, **dadurch gekennzeichnet, dass** die nachfolgende Elektronikeinheit (3) ebenfalls an das Bussystem (4) angeschlossen ist.

5. Kraftmesssystem nach Anspruch 4, **dadurch gekennzeichnet, dass** die Festlegung, welche beiden verschiedenen vorhandenen elektronischen Schaltungen (5), die das Gesamtsignal errechnen und an die nachfolgende Elektronikeinheit (3) weitergeben, benutzt wird, durch Steckerkodierung, Auswahlschalter oder Parametrierung im Festwertspeicher erfolgt.

6. Kraftmesssystem nach Anspruch 4, **dadurch gekennzeichnet, dass** mindestens zwei der vorhandenen elektronischen Schaltungen (5), die das Gesamtsignal errechnen und an die nachfolgende Elektronikeinheit (3) weitergeben, benutzt werden und dass die mindestens zwei errechneten Gesamtsignale miteinander verglichen werden und bei Nichtübereinstimmung ein Fehlersignal ausgegeben wird.

7. Kraftmesssystem nach Anspruch 4, **dadurch gekennzeichnet, dass** mindestens drei der vorhandenen elektronischen Schaltungen (5), die das Gesamtsignal errechnen und an die nachfolgende Elektronikeinheit (3) weitergeben, benutzt werden und dass die mindestens drei errechneten Gesamtsignale-miteinander verglichen -werden und nur dann ausgegeben werden, wenn mindestens zwei übereinstimmen.

8. Kraftmesssystem nach Anspruch 1, **dadurch gekennzeichnet, dass** mindestens eine der Kraftmesszellen (2') einen zusätzlichen Anschluss (6) für die nachfolgende Elektronikeinheit (3) aufweist.

9. Kraftmesssystem nach Anspruch 1, **dadurch gekennzeichnet, dass** es mindestens drei Kraftmesszellen (1, 2, 2') umfasst, auf denen sich eine gemeinsame Wägeplattform abstützt.

10. Kraftmesssystem nach Anspruch 1, **dadurch gekennzeichnet, dass** es mindestens drei Kraftmesszellen (1, 2, 2') umfasst und für die Erfassung der Belastung eines Sitzes (21) eingesetzt wird.

11. Kraftmesssystem nach Anspruch 9 oder 10, **dadurch gekennzeichnet, dass** die elektronische Schaltung (5), die das Gesamtsignal errechnet und an die nachfolgende Elektronikeinheit (3) weitergibt, zusätzlich weitere Parameter, wie z. B. die Lage des Schwerpunktes oder den Angriffspunkt der zu messenden Kraft, errechnet.

## Claims

1. Force measuring system comprising at least two force measuring cells, which detect part forces of the force to be measured and convert them into a digital output signal, and an electronic circuit, which calculates from the output signals of the individual force measuring cells a total signal dependent on the magnitude of the force to be measured and passes this total signal on to a downstream electronic unit for further processing or for data output, **characterised in that** the electronic circuit (5) which calculates the total signal and passes it on to the downstream electronic unit (3) is integrated in at least one force measuring cell (2, 2').

2. Force measuring system according to claim 1, **characterised in that** the electronic circuit (5) which calculates the total signal and passes it on to the downstream electronic unit (3) is integrated in each force measuring cell (2, 2').

3. Force measuring system according to claim 1, **characterised in that** the individual force measuring cells (1, 2) are connected together by way of a bus system (4).

4. Force measuring system according to claim 3, **characterised in that** the downstream electronic unit (3) is similarly connected to the bus system (4).

5. Force measuring system according to claim 4, **characterised in that** the determination used at the two different electronic circuits (5), which are present and which calculate the total signal and pass it on to the downstream electronic unit (3), is carried out by plug coding, selector switch or parameterisation in the read-only memory.

6. Force measuring system according to claim 4, **characterised in that** at least two of the electronic circuits (5), which are present and which calculate the total signal and pass it on to the downstream electronic unit (3), are used and that the at least two calculated total signals are compared with one another and in the case of non-agreement an error signal is issued.

7. Force measuring system according to claim 4, **characterised in that** at least three of the electronic circuits (5), which are present and which calculate the total signal and pass it on to the downstream electronic unit (3), are used and that the at least three calculated total signals are compared with one another and are issued only when at least two agree.

8. Force measuring system according to claim 1, **characterised in that** at least one of the force measuring cells (2') has an additional connection (6) for the downstream electronic unit (3).

9. Force measuring system according to claim 1, **characterised in that** it comprises at least three force measuring cells (1, 2, 2') on which a common weighing platform is supported.

10. Force measuring system according to claim 1, **characterised in that** it comprises at least three force measuring cells (1, 2, 2') and is used for detection of the loading of a seat (21).

11. Force measuring system according to claim 9 or 10, **characterised in that** the electronic circuit (5), which calculates the total signal and passes it on to the downstream electronic unit (3), calculates additional further parameters such as, for example, the position of the centre of gravity or the point of action of the force to be measured.

## Revendications

1. Système de mesure de force comprenant au moins deux cellules de mesure de force, qui détectent des forces partielles de la force destinée à être mesurée et les convertissent en un signal de départ numérique, et comprenant un circuit électronique, qui calcule à partir des signaux de départ des cellules de mesure de force individuelles un signal global dépendant de la taille de la force destinée à être mesurée et le transmet à une unité électronique placée en aval en vue d'un retraitement ou d'une sortie de données, **caractérisé en ce que** le circuit électronique (5), qui calcule le signal global et le transmet à l'unité électronique (3) placée en aval, est intégré dans au moins une cellule de mesure de force(2, 2').

2. Système de mesure de force selon la revendication 1, **caractérisé en ce que** le circuit électronique (5), qui calcule le signal global et le transmet à l'unité électronique (3) placée en aval, est intégré dans chaque cellule de mesure (2, 2').

3. Système de mesure de force selon la revendication 1, **caractérisé en ce que** les cellules de mesure de force (1, 2) individuelles sont reliées l'une à l'autre par un système de bus (4).

4. Système de mesure de force selon la revendication 3, **caractérisé en ce que** l'unité électronique (3) placée en aval est également raccordée au système de bus (4).

5. Système de mesure de force selon la revendication 4, **caractérisé en ce que** la détermination, laquelle est utilisée dans les différents circuits électroniques (5) présents, qui calculent le signal global et le transmettent à l'unité électronique (3) placée en aval, s'effectue par connexion codée, interrupteur de sélection ou paramétrage dans la mémoire morte.

6. Système de mesure de force selon la revendication 4, **caractérisé en ce qu'**on utilise au moins deux des circuits électroniques (5) présents, qui calculent le signal global et le transmettent à l'unité électronique (3) placée en aval, et **en ce que** les au moins deux signaux globaux calculés sont comparés l'un à l'autre et s'ils ne concordent pas, un signal d'erreur est émis.

7. Système de mesure de force selon la revendication 4, **caractérisé en ce qu'**on utilise au moins trois des circuits électroniques (5) présents, qui calculent le signal global et le transmettent à l'unité électronique (3) placée en aval, et **en ce que** les au moins trois signaux globaux calculés sont comparés les uns aux autres et ne sont émis que lorsqu'au moins deux concordent.

8. Système de mesure de force selon la revendication 1, **caractérisé en ce qu'**au moins une des cellules de mesure de force (2') comprend un raccordement additionnel (6) pour l'unité électronique (3) placée en aval.

9. Système de mesure de force selon la revendication 1, **caractérisé en ce qu'**il comporte au moins trois cellules de mesure (1, 2, 2'), sur lesquelles s'appuie une plateforme de pesée commune.

10. Système de mesure de force selon la revendication 1, **caractérisé en ce qu'**il comporte au moins trois cellules de mesure (1, 2, 2') et est utilisé pour la détection de la sollicitation d'un siège (21).

11. Système de mesure de force selon la revendication 9 ou 10, **caractérisé en ce que** le circuit électronique (5), qui calcule le signal global et le transmet à l'unité électronique (3) placée en aval, calcule en plus d'autres paramètres, comme par exemple la position du centre de gravité ou le centre de poussée de la force destinée à être mesurée.
